Europäisches Patentamt

European Patent Office

Office européen des brevets

(11) Publication number: **0 392 812**
**A2**

# (12) EUROPEAN PATENT APPLICATION

(21) Application number: **90303874.3**

(51) Int. Cl.⁵: **G01M 7/00**

(22) Date of filing: **10.04.90**

(30) Priority: **12.04.89 JP 42800/89**

(43) Date of publication of application:
**17.10.90 Bulletin 90/42**

(84) Designated Contracting States:
**DE FR GB IT**

(71) Applicant: **YAMAICHI ELECTRIC MFG. CO. LTD..**
**28-7, Nakamagome 3-chome**
**Ohta-ku Tokyo(JP)**

(72) Inventor: **Umemura, Kiyoshi**
**49-16, Sugao 3-chome**
**Miyamae-ku, Kawasaki-shi,**
**Kanagawa-ken(JP)**
Inventor: **Irie, Teruo**
**16-13, Nakano 6-chome**
**Nakano-ku, Tokyo(JP)**

(74) Representative: **Ben-Nathan, Laurence Albert et al**
**Urquhart-Dykes & Lord 91 Wimpole Street**
**London W1M 8AH(GB)**

(54) **Impact test hammer.**

(57) An impact test hammer for testing whether a testing object is good or not by striking the testing object with a proper striking power which is different depending on each testing object, has an impact acceleration sensor built in a head portion of the hammer and adapted to generate a signal of a scale corresponding to a magnitude of a striking power to be applied to the testing object, and a circuit built in a grip portion of the hammer. The circuit has a scale conversion amplifier provided with a range switch, degree of amplification of which is switched depending on a proper striking power to the testing object and which is adapted to convert the scale of an output signal of the impact acceleration sensor in accordance with such switched degree of amplification, a wind comparator actuated by the signal which was converted in scale in such a manner as to correspond to the magnitude of the proper striking power among such scale converted signals of the amplifier, and an indicator actuated by an output signal of the wind comparator.

FIG.1

EP 0 392 812 A2

**IMPACT TEST HAMMER**

## BACKGROUND OF THE INVENTION

### 1. Field of the Invention

This invention relates to an impact test hammer which is used for determining whether an object to be tested such as, for example, electronic circuit, electronic part, component part, etc. is good or not based on a proper striking power applied to the testing object, the proper striking power being established depending on the testing object.

### 2. Brief Description of the Prior Art

When, for example, an electronic circuit, an electronic part or the like is tested, such testing object is usually set in a testing apparatus and whether the testing object is good or not is determined by striking the object set in the testing apparatus by a hammer with a proper striking power which is decided depending on each testing object.

The conventional impact test hammer has, as means for determining whether it is a proper striking power to the testing object, a sensor comprising a piezo-electric device built in its head portion, and a battery as a power source and a buzzer actuated by an output signal of the sensor which are all built in a grip portion, so that when the testing object is struck with a striking power larger than the proper striking power, a voltage is output by the sensor to generate a buzzer sound and inform a person who is carrying out the test (hereinafter simply referred to as the "examiner") that the testing object is being struck with a striking power larger than proper by above-mentioned buzzer sound.

According to the conventional impact test hammer, when the testing object is struck with a power larger than a proper striking power, a buzzer sound is generated. Accordingly, although there is a lower limit of the striking power, there is not an upper limit for it. Therefore, the buzzer sound is always generated when the testing object is struck with a power larger a proper striking power. As a result, it is difficult to carry out a reliable test in which the testing object is always struck with a constant proper striking power. Also, because of the foregoing reason, there is a fear that the testing object is struck with a striking power larger than necessary.

Furthermore, the prior art includes such a vital problem as that the above mentioned hammer can be used only to one kind of testing object and different hammers must be used every time a plurality of testing objects to which proper striking powers are different are tested.

## SUMMARY OF THE INVENTION

It is therefore a principal object of the present inven tion to provide an impact test hammer which is capable of correctly testing a plurality of testing objects having different proper striking powers by a single hammer.

Another object of the present invention is to provide an impact test hammer which is capable of preventing a testing object from being damaged by being struck with a striking power larger than necessary.

In order to achieve the above objects, there is essentially provided an impact test hammer for testing whether a testing object is good or not by striking the testing object with a proper striking power which is different depending on each testing object, comprising an impact acceleration sensor built in a head portion of said hammer and adapted to generate a signal of a scale corresponding to a magnitude of a striking power to be applied to said testing object, and a circuit built in a grip portion of said hammer, said circuit including a scale conversion amplifier provided with a range switch, degree of amplification of which is switched depending on a proper striking power to said testing object and which is adapted to convert the scale of an output signal of said impact acceleration sensor in accordance with such switched degree of amplification, a wind comparator actuated by the signal which was converted in scale in such a manner as to correspond to the magnitude of said proper striking power among such scale converted signals of said amplifier, and an indicator actuated by an output signal of said wind comparator.

The impact test hammer of the present invention is used for a test simply by switching the scale conversion amplifier depending on testing objects. And only when the testing object is struck with a striking power within a range of a proper striking power, the wind comparator outputs a signal for actuating the indicator.

When the testing object is struck with a striking power beyond the upper and lower limits of the proper striking power, as the indicator is caused not to be actuated by the wind comparator, it can be recognized by the examiner that the striking power currently applying to the testing object is not proper. As a result, there is no such a fear as that the testing object is struck and damaged with a larger power than necessary without knowing that the current striking power is not proper. Also, when testing objects of different proper striking powers are tested, the impact test is properly performed simply by switching the scale conversion amplifier as mentioned above. That is, a plurality of testing objects can be properly tested by a single hammer.

The above and other objects and features of the present invention will become apparent from the following description taken in conjunction with a preferred embodiment thereof shown in the accompanying drawings.

## BRIEF DESCRIPTION OF THE DRAWINGS

The drawings show one embodiment of an impact measurement hammer according to the present invention, wherein:

Fig. 1 is a partly cutaway side view of the entire hammer;

Fig. 2 is a circuit diagram which is to be built in the hammer of Fig. 1; and

Fig. 3 is an explanatory view of the operation of the circuit diagram of Fig. 2.

## DETAILED DESCRIPTION OF THE EMBODIMENT

An impact test hammer of the present invention will now be described with reference to the accompanying drawings in which one embodiment of the construction of the hammer is depicted.

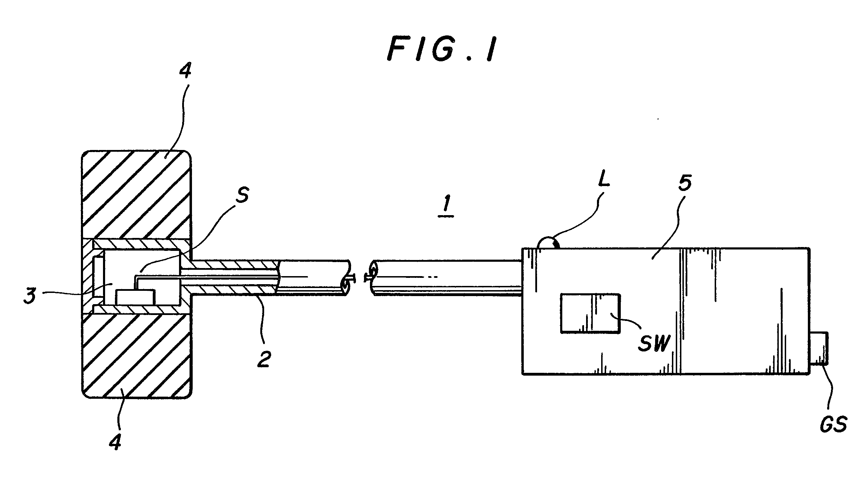

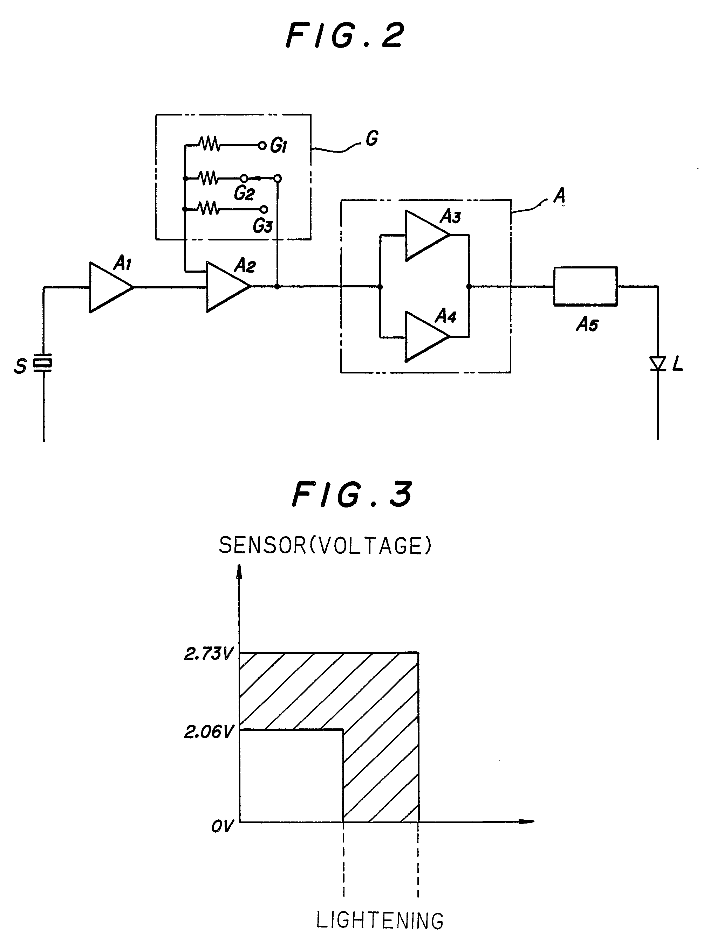

Fig. 1 shows an impact test hammer 1 of the present invention. The numeral 2 denotes a handle of the hammer 1. The handle 2 is formed in a cylindrical shape and provided with a sensor storage portion 3 formed on a front end thereof, the sensor storage portion 3 in which a vibration sensor, for example, an acceleration sensor S comprising a piezoelectric sensor such as piezoelectric ceramic is built. The sensor storage portion 3 has a striking portion 4 made of an elastic material such as, for example, urethane rubber which is fixed to an external portion of the sensor storage portion 3. The numeral 5 denotes a grip portion fixedly mounted on a rear end of the handle 2. A circuit shown in Fig. 2 is built in the grip portion 5 and the sensor storage portion 3.

That is, in Fig. 2, S denotes an acceleration sensor to be built in the sensor storage portion 3. The acceleration sensor S is adapted to generate a signal (voltage) of a scale corresponding to the magnitude of a striking power. The reference character $A_1$ denotes a sensor signal amplifier connected to an output side of the sensor S and adapted to amplify an output signal of the sensor S. The sensor signal amplifier $A_1$ is designed such that presuming the magnitude of a striking power of a proper striking power value $G_1$ of a certain testing object being in the range from 60G to 80G, a signal of 1.03V to 1.37V is output from an output side of the sensor signal amplifier $A_1$, that presuming the magnitude of a striking power of a proper striking power value $G_2$ of a certain testing object being in the range from 120G to 160G, a signal of 2.06V to 2.73V is output from the output side of the sensor signal amplifier $A_1$, and that presuming the magnitude of a striking power of a proper striking power value $G_3$ of a certain testing object being in the range from 180G to 240G, a signal of 3.09V to 4.11V is output from the output side of the sensor signal amplifier $A_1$.

The reference character $A_2$ denotes a scale conversion amplifier connected to the output side of the sensor signal amplifier $A_1$. The scale conversion amplifier $A_2$ includes a range switch G which can be switched, for example, to three stage switching contact points corresponding to proper striking power values $G_1$, $G_2$ and $G_3$ to the testing object and is adapted to convert the scale of an signal output from the amplifier $A_1$ at an amplification degree corresponding to the switching of the range switch G and output a scale conversion signal.

In case an impact test for an testing object of, for example, a proper striking power value of 60 to 80G (1.03 to 1.37V) is performed, the range switch F is switched to a switching contact point corresponding to the value $G_1$. By this, a gain setting resistance is switched, the amplification degree of the amplifier $A_2$ is changed and a scale conversion corresponding to the amplification degree is carried out. Furthermore, a scale conversion signal of, for example, 2.06 to 2.74V which is two times of 1.03 to 1.37V corresponding to the above-mentioned conversion is output. Similarly, in case the range switch G is switched to switching contact points corresponding to the values $V_2$ and $G_3$, they are set to signal amplification degrees corresponding to the respective gain setting resistances, only signals in the range of such switched proper striking powers are picked up and an indicator L such as lightening device (for example, LED) is actuated.

The reference character A denotes a wind comparator connected to the output side of the scale conversion amplifier $A_2$. The wind comparator $A_2$ comprises an upper limiter $A_3$ and a lower limiter $A_4$. Presuming, for example, that the upper limit of the upper limiter $A_3$ is set to 2.73V and the lower limit of the lower limiter $A_4$ is set to 2.06V as shown in Fig. 3, the upper limiter $A_4$ outputs a signal of, for example, 5V, for actuating the indicator L when the signal is smaller than 2.73V and outputs a signal of 0V when the signal is larger than that, and the lower limiter $A_4$ outputs a signal of, for example, 5V, for actuating the indicator L when the signal is smaller than 2.06V and outputs a signal of 0V when the signal is larger than that, wired OR of the upper and lower limiters $A_3$ and $A_4$ being served as an input signal of the indicator L. That is, when one of the limiters $A_3$ and $A_4$ outputs a signal of 5V and the other outputs a signal of 0V, an actuation signal of the indicator L can be obtained, and only when both limiters $A_3$ and $A_4$ output 5V, an actuation signal of the indicator L can be obtained. That is, only when a signal within a range of the lower limit (2.06V) and the upper limit (2.73V) of the both limiters $A_3$ and $A_4$ is input in the wind comparator A, the actuation signal of the indicator L is output.

Although the upper limit and lower limit are set within a range of 2.06V and 2.73V equal to the proper striking power value $G_2$ in the above embodiment, the present invention is, as a matter of course, not limited to this.

The reference character $A_5$ denotes a timer connected to the output side of the wind comparator A. The timer $A_5$ is adapted to set the period of lightening time of the indicator L as shown in Fig. 3. It is noted that the indicator L includes a buzzer.

Of all the construction of the circuit mentioned above, the circuit excluding the acceleration sensor S is built in the grip portion 5 of the hammer 1 together with a power source battery and connected with the acceleration sensor S disposed in the sensor storage portion 3 through the handle 2. Also, the amplifier $A_1$ may be disposed within the sensor storage portion 3.

An operation knob GS of the range switch G is disposed at a suitable place of the grip portion 5, for example, a rear end face of the grip portion 5, a power switch SW being disposed on a gripping surface of the grip portion 5 so that the power switch SW is depressed by the palm when the grip portion 5 is gripped by hand and the power source is turned on, the indicator L being disposed in a position where the indicator L is not hidden with the hand when the grip portion 5 is gripped by the hand.

In Fig. 2, the power source battery and a circuit for stabilizing the same are omitted.

Operation of such constructed impact measurement hammer of the present invention will be described. In order to simplify the explanation thereof, there will be described on a case where a testing object of a proper striking power value of 120 to 160G is tested. First, the operation knob GS of the range switch G is switched to a switching contact point corresponding to the proper striking power value $G_2$.

When, for example, a testing object previously set in a testing device is struck with such set hammer 1, a signal (voltage) of a scale corresponding to the magnitude of the striking power is generated by the sensor S.

This signal is amplified into a predetermined scale by the sensor signal amplifier $A_1$. That is, when the testing object is struck with a striking power within a range of 60G to 80G, a signal within a range of 1.03V to 1.37V is generated. On the other hand, when the testing object is struck with a striking power within a range of 120G to 160G, a signal within a range of 2.06V to 2.73V is generated. Likewise, when the testing object is struck with a striking power within a range of 180G to 240G, a signal within a range of 3.09V to 4.11V is generated. That is, a signal having a different scale depending on the magnitude of the striking power at that time is output from the output side of the sen sor signal amplifier $A_1$. Such various scales of output signals are amplified by the scale conversion amplifier $A_2$ in accordance with the amplification degree set by the range switch G, that is, the signal is converted in its scale and then output.

Such scale converted output signal is input in the wind comparator $A_3$ of the next following stage. In this wind comparator $A_3$, only when a voltage signal within the range (2.06V to 2.73V) set by the lower limiter $A_4$ and the upper limiter $A_3$ is input, an signal for actuating the indicator is output in order to actuate the indicator.

By this output, the indicator, for example, a lamp L is lightened for a period of time set by the timer $A_5$ as shown in Fig. 3.

Presuming, for example, that the amplification degree, which was set in the manner as mentioned above, is 1, when the testing object is struck with a striking power of 60G to 80G, a signal of 1.03 to 1.37V is output as it is, and when the testing object is struck with a striking power of 120G to 160G, a signal of 2.06V to 2.73V is output. Likewise, when the testing object is struck with a striking power of 180 to 240G, a signal of 3.06 to 4.11V is output as it is. In the wind comparator A, only when a signal of 2.06 to 2.73V is input, the indicator L is actuated. The examiner can recognize from the indicator L, for example, a lightening of a lightening device that the testing object is being struck with a proper striking power.

In the illustrated example, although the range switch of the scale conversion amplifier $A_2$ is of three stage and a single hammer can be used for different testing objects in such three stages, the hammer of the present invention is not limited to the illustrated example. Instead, the number of the range switching stages can be desirably selected.

As described in the foregoing, according to an impact test hammer of the present invention, it can be used for a test by switching the scale conversion amplifier depending on different testing objects and only when the testing objects are struck with proper striking powers, which are different depending on the testing objects, the wind comparator outputs a signal for actuating the indicator in order to actuate the indicator. That is, in case testing objects having different proper striking powers are tested, such plurality of testing objects can be tested as to whether they are good or not by a single hammer simply by switching the scale conversion amplifier as mentioned above.

When such testing objects are struck with a striking power of a magnitude beyond the lower and upper limits of proper striking power, the indicator is caused not to be actuated by the wind comparator. Accordingly, the examiner can recognize that the striking power currently applying to the testing object is not proper. Therefore, there can be avoided such an incidence where the testing object is struck and damaged with a striking power stronger than necessary without knowing the testing object being struck with such improper scale of striking power.

## Claims

An impact test hammer for testing whether a testing object is good or not by striking the testing object with a proper striking power which is different depending on each testing object, comprising:
an impact acceleration sensor built in a head portion of said hammer and adapted to generate a signal of a scale corresponding to a magnitude of a striking power to be applied to said testing object; and a circuit built in a grip portion of said hammer; said circuit including a scale conversion amplifier provided with a range switch, degree of amplification of which is switched depending on a proper striking power to said testing object and which is adapted to convert the scale of an output signal of said impact acceleration sensor in accordance with such switched degree of amplification, a wind comparator actuated by the signal which was converted in scale in such a manner as to correspond to the magnitude of said proper striking power among such scale converted signals of said amplifier, and an indicator actuated by an output signal of said wind comparator.

EP 0 392 812 A2

# FIG.1

# FIG. 2

# FIG. 3

SENSOR(VOLTAGE)

2.73V

2.06V

0V

LIGHTENING